# EUROPÄISCHE PATENTSCHRIFT

(11) **EP 0 718 852 B1**
(45) Veröffentlichungstag und Bekanntmachung des Hinweises auf die Patenterteilung: **24.11.1999**
(21) Anmeldenummer: 95120258.9
(22) Anmeldetag: 21.12.1995
(51) Int. Cl.: G21C 13/08

(54) **Sicherheitsbehälter einer Kernkraftanlage**
Security containment for nuclear power plant
Enceinte de sécurité pour centrale nucléaire

(30) Priorität: 23.12.1994 DE 4446422
(43) Veröffentlichungstag der Anmeldung: 26.06.1996
(73) Patentinhaber: SIEMENS AKTIENGESELLSCHAFT, 80333 München (DE)
(72) Erfinder: Zeitschel, Günter, D-60431 Frankfurt (DE); Pflug, Volker, Dipl.-Ing., D-63505 Langenselbold (DE)

(56) Entgegenhaltungen:
- EP-A- 0 151 487
- US-A- 3 424 239
- US-A- 3 899 391
- KERNTECHNIK, Bd. 55, Nr. 6, 1990, MUNCHEN DE, Seiten 335-339, XP002000538 WEISS: "Stabilized austenitic stainless steel for light water reactors"

## Beschreibung

Die Erfindung betrifft einen Sicherheitsbehälter einer Kernkraftanlage, welche einen Reaktordruckbehalter, eine Druckkammer und eine Kondensationskammer druckdicht einschließt und eine Betonstruktur mit einer Auskleidung aufweist.

Der Sicherheitsbehälter einer Kernkraftanlage umschließt einen den Reaktorkern enthaltenden Reaktordruckbehälter druckdicht, so daß selbst bei anomalen Betriebszuständen die Freisetzung radioaktiver Substanzen in die Umgebung unterbunden ist. Der Sicherheitsbehälter einer Siedewasser-Kernkraftanlage umschließt neben dem Reaktordruckbehälter ein Druckabbausystem, in welchem aus dem Reaktordruckbehälter während eines anomalen Betriebszustandes ausströmender Wasserdampf kondensierbar ist und somit die Druckbelastung des Sicherheitsbehälters auf einem sicheren Maß gehalten wird. Das Druckabbausystem umfaßt eine in der Regel relativ kleine Druckkammer aus Stahl oder Spannbeton, aus der über Rohre Wasserdampf in ein mit Wasser gefülltes Becken einer Kondensationskammer strömen kann. Die Druckkammer dämpft einen ggf. auftretenden Druckstoß, und in der Kondensationskammer wird der einströmende Wasserdampf kondensiert. Der Sicherheitsbehälter einiger Siedewasser-Kernkraftanlagen ist als Stahlbehälter ausgeführt. Der Sicherheitsbehälter sowie die Druck- und Kondensationskammer können auch, wie beispielsweise in dem Buch "Reaktor-Sicherheitstechnik" von D. Smidt, Springer Verlag, 1979, Kapitel 4.9, Seiten 114 bis 119, aus Stahlbeton hergestellt sein, welcher mit einer Dichthaut aus Stahlblech ausgekleidet ist. Der hierfür verwendete Stahl mit der Kurzbenennung 15MnNi63 und der Werkstoffnummer 1.6210 ist gemäß der sicherheitstechnischen Regel KTA 3401.1 des Kerntechnischen Ausschusses der Bundesrepublik Deutschland für Reaktorsicherheitsbehälter aus Stahl zugelassen. Dieser ferritische kaltzähe Stahl ist zum Schutz vor Korrosion durch Einwirkung von in der Kondensationskammer gespeichertem Wasser mit einem Schutzanstrich, beispielsweise aus Teerpechepoxi, versehen. Bei einer Undichtigkeit des Schutzanstriches, beispielsweise aufgrund von Alterungseffekten, ist die Auskleidung aus dem ferritischen Stahl ggf. auszutauschen oder ein neuer Schutzanstrich aufzutragen, was zu unerwünschten Stillstandszeiten und zu erheblichen Mehrkosten für die Kernkraftanlage führen kann.

In der US-PS 5,301,215 ist eine Siedewasser-Kernkraftanlage beschrieben, bei der in einem aus Beton bestehenden Sicherheitsbehälter ein Reaktordruckbehälter, eine Kondensationskammer sowie ein geodätisches Flutbecken angeordnet sind. Diese in dem Sicherheitsbehälter angeordneten Komponenten werden von einer mit dem Beton verbundenen Stahlauskleidung gasdicht umschlossen. Bei der Stahlauskleidung handelt es sich um eine konventionelle Ausführung, d.h. einen mit einer Korrosionsschutzschicht überzogenen Stahl.

Aufgabe der Erfindung ist es daher, eine haltbare, korrosionsbeständige und einfache herzustellende Auskleidung eines Sicherheitsbehälters anzugeben.

Erfindungsgemäß wird die vorgenannte Aufgabe gelöst durch einen Sicherheitsbehälter einer Kernkraftanlage, welcher einen Reaktordruckbehälter, eine Druckkammer und eine Kondensationskammer druckdicht einschließt und eine Betonstruktur mit einer Auskleidung aufweist, wobei die Auskleidung aus einem korrosionsbeständigen austenitisch-ferritischen Stahl besteht.

Ein korrosionsbeständiger austenitisch-ferritischer Stahl, welcher insbesondere auch den Anforderungen an Stähle in Sicherheitsbehältern genügt, macht eine zusätzliche Beschichtung der wasserbenetzbaren Oberflächen der Auskleidung überflüssig. Hierdurch ist die Wahrscheinlichkeit einer notwendigen Reparatur deutlich verringert sowie die Herstellung der Auskleidung des Sicherheitsbehälters deutlich vereinfacht und schneller durchzuführen. Auch eventuell notwendige Reparaturarbeiten können einfach und schnell durchgeführt werden. Zudem ist in einem dekontaminierbaren Bereich des Sicherheitsbehälters bei Verwendung des korrosionsbeständigen Stahls der Auftrag einer Grundierung mit anschließendem Dekontaminationsanstrich nicht notwendig.
Die Auskleidung des Sicherheitsbehälters, insbesondere der Kondensationskammer, erfolgt vorzugsweise durch Anbringen von Blechen, die insbesondere miteinander verschweißt sind.

Vorzugsweise hat der korrosionsbeständige Stahl als Blech eine Dehnspannung σ_{0,2} bei Raumtemperatur von über 450 N/mm². Die Dehnspannung σ_{0,2} ist definitionsgemäß diejenige Spannung in einem Zugversuch, bei welcher nach erfolgter Entlastung ein bleibender Dehnungsrest von 0,2 % zurückbleibt. Sie gibt dabei per Definition die Fließgrenze, d.h. den Übergang zwischen elastischer und plastischer Formänderung des verwendeten Materials an. Je größer die Spannung σ_{0,2} ist, desto größer ist der Spannungsbereich, in dem sich der Werkstoff rein elastisch verhält. Ein Stahl mit obigen Eigenschaften ist gegenüber den bisher für Sicherheitsbehälter verwendeten Stählen in einem größeren Bereich elastisch deformierbar. Sein Dehnverhalten ist somit deutlich günstiger als das der bisher verwendeten Stähle.

Vorzugsweise weist der Stahl in Gewichtsprozent angegebene Gehalte von 20 % bis 27 % Chrom, 4 % bis 8 % Nickel und bis zu 5 % Molybdän auf. Er ist mit weiterem Vorzug im wesentlichen aus folgenden Elementen zusammengesetzt (Angaben in Gewichtsprozent) : 21 % bis 23 % Chrom, 4,5 % bis 6,5 % Nickel, 2,5 % bis 3,5 % Molybdän, bis 1,0 % Silizium, bis 0,03 % Kohlenstoff, bis 2 % Mangan, 0,08 % bis 0,2 % Stickstoff sowie einem Rest aus Eisen und herstellungsbedingten Verunreinigungen. Der Stahl hat eine hohe Beständigkeit gegen Spannungsrißkorrosion und durch seinen geringen Anteil an Kohlenstoff und Zusatz von Stickstoff sowie dem ausgewogenen Verhältnis der Legierungsmetalle Chrom, Molybdän und Nickel eine hohe Gefügestabilität und gute Schweißeigenschaften. Versprödungen und Karbidausscheidungen in wärmebeeinflußten Zonen von Schweißverbindungen werden weitgehend vermieden. Dadurch wird die Zähigkeit und die Beständigkeit gegen interkristalline Korrosion wesentlich verbessert. Er hat als Flacherzeugnis, insbesondere als Blech, eine Zugfestigkeit von 680 N/mm² bis 880 N/mm² bei Raumtemperatur und bei 280 °C eine Spannung σ_{0,2} von mindestens 285 N/mm². Nach einem Lösungsglühen bei 1040 °C bis 1100 °C besteht der Stahl aus einem ausscheidungsfreien Duplex-Gefüge aus ungefähr 40 % Ferrit und 60 % Austenit. Das Duplex-Gefüge bleibt auch bei höheren Temperaturen erhalten. Der Stahl hat aufgrund des geringen Kohlenstoffgehaltes von maximal 0,03 % auch in einem Temperaturbereich von 600 °C bis 950 °C eine sehr gute Beständigkeit gegen interkristalline Korrosion.

Der Sicherheitsbehälter weist vorzugsweise ein Flutbecken auf, welches einen Wasservorrat enthält, der für eine Flutung des Reaktordruckbehälters in einem anomalen Betriebszustand der Kernkraftanlage ausreichend ist. Der Wasservorrat in dem Flutbecken besteht vorzugsweise aus deionisiertem Wasser. Zum Schutz der das Flutbecken bildenden Betonstruktur ist dieses mit dem erwähnten Stahl am Boden, an Wänden und ggf. der Decke ausgekleidet. Die Kondensationskammer, welche in einem normalen Betrieb der Kernkraftanlage ebenfalls mit insbesondere deionisiertem Wasser gefüllt ist, ist vorzugsweise ebenfalls mit dem Stahl ausgekleidet. Die Auskleidung umfaßt insbesondere die Boden- und Wandpartien der Kondensationskammer.

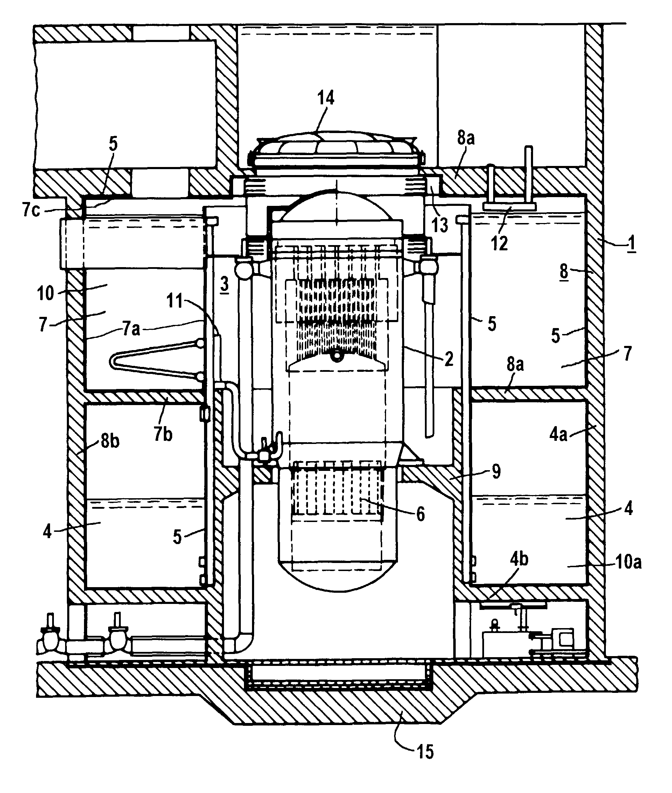

Anhand der Zeichnung wird ein Sicherheitsbehälter einer Siedewasserreaktor-Kernkraftanlage näher erläutert. Die einzige Figur zeigt einen Längsschnitt durch den Sicherheitsbehälter der Siedewasser-Kernkraftanlage.

Der Sicherheitsbehälter 1 ist im wesentlichen durch eine Betonstruktur 8 gebildet, die Wände 8b, Decken 8a sowie einen Teil des Fundamentes 15 der Kernkraftanlage umfaßt. Die geodätisch oberste Decke 8a des Sicherheitsbehälters 1 weist eine Öffnung 13 auf, die druckdicht mit einer Dichtung 14 verschlossen ist. Unterhalb der Öffnung 13 ist der Reaktordruckbehälter 2, welcher den Reaktorkern 6 der Kernkraftanlage enthält, angeordnet. Der Reaktordruckbehälter 2 wird von einer Tragstruktur 9 getragen und ist druckdicht in einer Druckkammer 3 angeordnet. Beiderseits der Druckkammer 3 ist innerhalb des Sicherheitsbehälters 1 und geodätisch oberhalb des Fundamentes 15 eine Kondensationskammer 4 gebildet. Geodätisch oberhalb der Kondensationskammer 4 schließt sich beiderseits der Druckkammer 3 ein Flutbecken 7 an. Die Kondensationskammer 4 ist mit einem Wasservorrat 10a und das Flutbecken 7 mit einem Wasservorrat 10 befüllt. Die Wasservorräte 10 und 10a enthalten jeweils deionisiertes Wasser. Zum Schutz gegen den korrosiv wirkenden Wasservorrat 10a sind die Wände 4a und der Boden 4b der Kondensationskammer 4 mit einer Auskleidung 5 aus Blechen eines austenitisch-ferritischen korrosionsbeständigen Stahls bedeckt. Die Auskleidung 5 ist ebenfalls an dem Boden 7b und den Wänden 7a des Flutbeckens 7 zum Schutz vor Korrosion angeordnet. In dem Flutbecken 7 sind ein Notkondensator 11 und ein Containment-Kondensator 12, welcher der Abfuhr von Wärme aus dem Sicherheitsbehälter 1 dient, angeordnet. Mit der Auskleidung 5 der Betonstruktur 8 wird diese wirksam gegen das in der Kondensationskammer 4 und dem Flutbecken 7 gespeicherte Wasser geschützt. Die Auskleidung 5 ist einfach zu montieren, wodurch die Bauzeit des Sicherheitsbehälters 1 verkürzt werden kann.

Die Erfindung zeichnet sich durch eine Auskleidung für eine mit Wasser gefüllte Kondensationskammer und ein mit Wasser gefülltes Flutbecken eines Sicherheitsbehälters einer Kernkraftanlage aus, wobei die Auskleidung aus einem korrosionsbeständigen austenitisch-ferritischen Stahl besteht. Dieser Stahl weist (in Gewichtsprozent angegeben) Anteile von 4,5 % bis 6,5 % Nickel, 21 % bis 23 % Chrom und 2,5 % bis 3,5 % Molybdän auf. Er hat gegenüber herkömmlichen bei der Herstellung von Sicherheitsbehälter verwendeten Stählen, insbesondere einem Stahl mit der Kurzbenennung 15MnNi63, ein um mindestens 10 % günstigeres Dehnverhalten, eine höhere Wärmeübergangszahl, eine höhere Bruchdehnung und eine höhere Zähigkeit. Zudem entfällt ein sonst notwendiger Schutzanstrich gegen Wasser sowie ein sonst notwendiger Dekontaminationsanstrich. Die Lebensdauer der Auskleidung gegenüber bisher verwendeten Auskleidungen von ca. 15 Jahren kann dadurch deutlich erhöht sein.

## Patentansprüche

1. Sicherheitsbehälter (1) einer Kernkraftanlage, welcher einen Reaktordruckbehälter (2), eine Druckkammer (3) und eine Kondensationskammer (4) druckdicht einschließt und eine Betonstruktur (8) mit einer Auskleidung (5) aufweist, wobei die Auskleidung (5) aus einem korrosionsbeständigen austenitisch-ferritischen Stahl besteht.

2. Sicherheitsbehälter (1) nach Anspruch 1, bei der die Auskleidung (5) Bleche (6) enthält.

3. Sicherheitsbehälter (1) nach einem der Ansprüche 1 oder 2, wobei der Stahl als Blech (6) eine Dehnspannung σ_{0,2} bei Raumtemperatur von über 450 N/mm² hat.

4. Sicherheitsbehälter (1) nach einem der vorhergehenden Ansprüche, bei dem der Stahl (in Gewichtsprozent) 20 % bis 27 % Chrom, 4 % bis 8 % Nickel und bis zu 5 % Molybdän aufweist.

5. Sicherheitsbehälter (1) nach einem der vorhergehenden Ansprüche, bei dem der Stahl aus im wesentlichen folgenden Elementen zusammengesetzt ist (Angaben in Gewichtsprozent):
bis 1,0 % Silizium
21 % bis 23 % Chrom
2,5 % bis 3,5 % Molybdän
bis 0,03 % Kohlenstoff
bis 2 % Mangan
4,5 % bis 6,5 % Nickel
0,08 % bis 0,2 % Stickstoff
Rest Eisen sowie herstellungsbedingte Verunreinigungen.

6. Sicherheitsbehälter (1) nach einem der vorhergehenden Ansprüche, welcher ein Flutbecken (7) aufweist, das zum Schutz gegen Wasser mit einer ebensolchen Auskleidung (5) ausgekleidet ist.

7. Sicherheitsbehälter (1) nach einem der vorhergehenden Ansprüche, bei dem die Kondensationskammer (4) zum Schutz gegen Wasser mit einer ebensolchen Auskleidung (5) ausgekleidet ist.

## Claims

1. Containment shell (1) of a nuclear power station, which surrounds in a pressure-tight manner a reactor pressure vessel (2), a pressure chamber (3) and a condensation chamber (4) and has a concrete structure (8) with a lining (5), with the lining (5) consisting of a corrosion-resistant austenitic-ferritic steel.

2. Containment shell (1) according to claim 1, in which the lining (5) contains metal sheets (6).

3. Containment shell (1) according to one of claims 1 or 2, with the steel as a metal sheet (6) having an expansion stress σ_{0.2} at room temperature of over 450 N/mm².

4. Containment shell (1) according to one of the preceding claims, in which the steel has (in percent by weight) 20 % to 27 % chromium, 4 % to 8 % nickel and up to 5 % molybdenum.

5. Containment shell (1) according to one of the preceding claims, in which the steel is basically composed of the following elements (details in percent by weight):
up to 1.0 % silicon
21 % to 23 % chromium
2.5 % to 3.5 % molybdenum
up to 0.03 % carbon
up to 2.0 % manganese
4.5 % to 6.5 % nickel
0.08 % to 0.2 % nitrogen
remainder iron and production-related impurities.

6. Containment shell (1) according to one of the preceding claims, which has a flood tank (7) which, for protection against water, is lined with such a lining (5).

7. Containment shell (1) according to one of the preceding claims, in which the condensation chamber (4), for protection against water, is lined with such a lining (5).

## Revendications

1. Enceinte (1) de confinement d'une installation nucléaire qui enferme de manière étanche à la pression une cuve (2) de réacteur résistant à la pression, une chambre (3) sous pression et une chambre (4) de condensation et qui a une structure (8) en béton ayant un revêtement (5), le revêtement (5) étant en acier austénitique ferritique résistant à la corrosion.

2. Enceinte (1) de confinement suivant la revendication 1, dans laquelle le revêtement (5) comporte des tôles (6).

3. Enceinte (1) de confinement suivant l'une des revendications 1 ou 2, dans laquelle l'acier sous forme de tôle (6) a une contrainte d'allongement σ0,2 à la température ambiante supérieure à 450 N/mm².

4. Enceinte (1) de confinement suivant l'une des revendications précédentes, dans laquelle l'acier (en pourcentage en poids) contient de 20 % à 27 % de chrome, de 4% à 8 % de nickel et jusqu'à 5 % de molybdène.

5. Enceinte (1) de confinement suivant l'une des revendications précédentes, dans laquelle l'acier est composé essentiellement des éléments suivants (les indications sont données en pourcentages en poids):
jusqu'à 1,0 % de silicium
de 21 % à 23 % de chrome
de 2,5 % à 3,5 % de molybdène
jusqu'à 0,03 % de carbone
jusqu'à 2 % de manganèse
de 4,5 % à 6,5 % de nickel
de 0,08 % à 0,2 % d'azote
le reste étant du fer ainsi que des impuretés dues à la fabrication.

6. Enceinte (1) de confinement suivant l'une des revendications précédentes, qui comporte un bassin (7) d'inondation qui, pour la protection vis-à-vis de l'eau, est revêtu de ce même revêtement (5).

7. Enceinte (1) de confinement suivant l'une des revendications précédentes, dans laquelle la chambre (4) de condensation est, en vue d'être protégée vis-à-vis de l'eau, revêtue du même revêtement (5).
